# EUROPÄISCHE PATENTSCHRIFT

(11) **EP 0 793 399 B1**
(45) Veröffentlichungstag und Bekanntmachung des Hinweises auf die Patenterteilung: **28.05.2003**
(21) Anmeldenummer: 97103147.1
(22) Anmeldetag: 26.02.1997
(51) Int. Cl.: H05B 1/02, H05B 3/14

(54) **Selbstregelndes Heizelement**
Selfregulating heating element
Elément de chauffage à autorégulation

(30) Priorität: 29.02.1996 DE 19607699
(43) Veröffentlichungstag der Anmeldung: 03.09.1997
(73) Patentinhaber: Beru AG, 71636 Ludwigsburg (DE)
(72) Erfinder: Merz, Rolf, 74354 Besigheim (DE)
(74) Vertreter: WILHELMS, KILIAN & PARTNER Patentanwälte

(56) Entgegenhaltungen:
- EP-A- 0 092 406
- EP-A- 0 101 560
- WO-A-86/01064

## Beschreibung

Die Erfindung betrifft ein selbstregelndes Heizelement zum Erwärmen eines gasförmigen strömenden Mediums der im Oberbegriff des im Patentanspruchs 1 angegebenen Art.

Ein derartiges Heizelement ist aus der WO 8601064 A bekannt.

Aus der EP-A-0092496 ist es weiterhin bekannt, bei langgestreckten elektrischen Heizeinrichtungen aus zwei Leitern elektrische Bauelemente parallel zwischen die beiden Leiter zu schalten.

Heizelemente, die eine starke Temperaturabhängigkeit des spezifischen elektrischen Widerstandes zeigen, werden beispielsweise für elektrische Heizöfen und elektrische Trockner und insbesondere für die Ansaugluftvorwärmung in Brennkraftmaschinen verwandt. Zur Vorwärmung der Ansaugluft in Brennkraftmaschinen wird das Heizelement in einen sogenannten Heizflansch eingebaut und im Ansaugkanal der Brennkraftmaschine angeordnet.

Es sind selbstregelnde Heizelemente zur Erwärmung strömender gasförmiger Medien bekannt (EP 0 616 486 A1), bei denen als Heizquelle Bariumtitanat-Keramiken (BaTiO₃) mit unterschiedlicher Dotierung eingesetzt werden. Diese Keramiken zeigen in einem Temperaturfenster von 30° bis 40° K einen steilen Anstieg des spezifischen elektrischen Widerstandes. Je nach Dotierung kann dieser Bereich beispielsweise zwischen 220°C und 250°C liegen. Es können somit Temperaturen der Keramik bis maximal 250°C realisiert werden. Die Wärmeabgabe an das gasförmige Medium erfolgt beispielsweise über metallische Mäander, die mit den Bariumtitanat-Keramiken in Kontakt stehen und deren Oberflächentemperatur dann 80° bis 120°C erreicht. Bei hohen Strömungsgeschwindigkeiten, beispielsweise bei der Ansaugluftvorwärmung in Brennkraftmaschinen, wird zum besseren Wärmeübergang jedoch eine größere Temperaturdifferenz zwischen der Heizelementoberfläche und dem gasförmigen Medium benötigt. Bariumtitanat-Keramiken haben darüber hinaus den Nachteil, daß sie mit hohen Kosten verbunden sind.

Es sind auch nicht selbstregelnde Heizelemente zur Erwärmung strömender gasförmiger Medien bekannt, bei denen ein Metall mit relativ hohem spezifischen elektrischen Widerstand und guter Zunderbeständigkeit, beispielsweise eine CrFeAl-Legierung, eingesetzt wird. Derartige Heizelemente erreichen hohe Temperaturen, sie haben jedoch sehr lange Aufheizzeiten. Das gilt auch für nicht extern gesteuerte Heizelemente. Externe Steuerungen, beispielsweise in Form einer Pulsweitenmodulation, sind aber mit relativ hohen Kosten verbunden.

Das Problem der Ausbildung von selbstregelnden Heizelementen besteht im übrigen darin, daß Heizleiter mit hohen Regeleigenschaften außerordentlich stark korrosionsanfällig sind.

Die der Erfindung zugrundeliegende Aufgabe besteht darin, ein selbstregelndes Heizelement zum Erwärmen eines gasförmigen strömenden Mediums mit wenigstens einem Regelleiter mit positivem Temperaturkoeffizienten seines spezifischen Widerstandes zu schaffen, das auf eine hohe Temperatur erwärmt werden kann und dadurch einen hohen Regelfaktor hat sowie einen guten Wärmeübergang an das vorbeiströmende gasförmige Medium zeigt.

Die der Erfindung zugrunde liegende Aufgabe besteht darin, ein selbstregelndes Heizelement zum Erwärmen eines gasförmigen strömenden Mediums der eingangs genannten Art zu schaffen, das auf eine hohe Temperatur erwärmt werden kann und dadurch einen hohen Regelfaktor hat sowie einen guten Wärmeübergang an das vorbeitströmende gasförmige Medium zeigt.

Diese Aufgabe wird gemäß der Erfindung bei einem selbstregelnden Heizelement der eingangs genannten Art dadurch gelöst, daß der Regelleiter in Form eines Mantelleiters aus einem Regeldraht aufgebaut ist, der über eine keramische Isolierschicht in einem metallischen Mantel angeordnet ist, der über seine Länge mit dem bandförmigen Leiter verbunden ist.

Bei einem derartigen Heizelement ist der Regelleiter das Bauteil, das nahezu über die gesamte Betriebsdauer mit der Ausnahme ggfs. der ersten 1 bis 2 Sekunden nach dem Einschalten die höchste Temperatur hat. Die Temperatur des Regelleiters wird durch dessen Eigenerwärmung bestimmt. Dabei ist eine rasche Eigenerwärmung erwünscht, da diese eine Verkürzung der Glühdauer ermöglicht. Eine hohe Leistungsaufnahme während der Anlasserbetätigung nach der Vorglühphase ist demgegenüber unerwünscht, da dadurch die Anlasserdrehzahl und damit die Startwilligkeit des Motors reduziert wären. Das Heizelement muß zu seiner raschen Erwärmung daher einen gegenüber der normalen Stromaufnahme deutlich höheren Anfangsstrom aufnehmen, wobei diese hohe Stromaufnahme nach kurzer Zeit, d.h. nach 3 bis 60 Sekunden, vorzugsweise 3 bis 10 Sekunden, auf den Normalwert zurückgeht.

Um einen hohen Gesamtregelfaktor des Heizelementes, d.h. einen hohen Quotienten aus dem Anfangsstrom zum stationären Strom zu erzielen, muß der Regelleiter im stationären Zustand mit Abstand die größte Widerstandskomponente der Reihenschaltung aus Regelleiter und bandförmigem Leiter liefern. Der Widerstandsanteil im stationären Zustand ohne Luftstrom beträgt insbesondere wenigstens 70 % und bei Regelleitern mit Regelfaktoren von mehr als 10 vorzugsweise mehr als 80 %. Der größte Teil der erzeugten Wärme fällt daher am Regelleiter an.

Da zur Erzielung eines hohen Regelfaktors der Regelleiter auf sehr hohe Temperaturen von mehr als 1000°C erwärmt werden muß, ist durch den hohen Leistungsumsatz des Regelleiters im stationären Zustand eine gut wärmeleitende Verbindung zum bandförmigen Leiter erforderlich. Da der bandförmige Leiter im Verhältnis zu seiner Oberfläche nur eine geringe Wärmeentwicklung zeigt und eine niedrige Temperatur hat, fließt vom Regelleiter Wärmeenergie durch Wärmeleitung in den bandförmigen Leiter. Das schützt zum einen den Regelleiter vor einer Überhitzung und verbessert zum anderen die Wärmeabgabe an den Luftstrom.

Im Rahmen der Reihenschaltung aus dem Regelleiter und dem bandförmigen Leiter hat der bandförmige Leiter im wesentlichen nur eine elektrische Funktion als Konstantwiderstand, vorwiegend als Vorschaltwiderstand zur Begrenzung des Einschaltstromes. Zur Realisierung einer hohen Einschaltleistung zur raschen Erwärmung des Heizelementes muß der Regelleiter zu Beginn der Aufheizphase sehr niederohmig sein. Da sein Widerstand im stationären Zustand jedoch stark ansteigt, ist es sinnvoll, den Mindestwiderstand des Heizelementes durch einen Konstantwiderstand, z.B. durch den bandförmigen Leiter, zu gewährleisten.

Der Temperaturgradient innerhalb des bandförmigen Leiters, d.h. die in Richtung zu der dem Regelleiter abgewandten Seite abfallende Temperatur kann zur Befestigung des Heizelementes insofern genutzt werden, als die Temperatur bei einer ausreichenden Bandbreite des bandförmigen Leiters so abfällt, daß die Befestigung in einem duroplastischen Kunststoff mit einer Dauerbetriebstemperatur von beispielsweise ca. 300°C möglich wird. Ein keramischer Stützisolator ist damit nicht mehr erforderlich.

Da der Regelleiter als Mantelleiter ausgebildet ist, ist die Korrosionsanfälligkeit wesentlich verringert, da der eigentliche Regeldraht durch die Ummantelung mit dem metallischen Mantel gegenüber dem zu erwärmenden Medium geschützt ist. Wenn der Regelleiter in Form eines Mantelleiters ausgebildet ist, kann dieser somit direkt in das zu erwärmende Medium eingebracht werden. Dabei ist ein guter Wärmeübergang zwischen dem Regeldraht und dem umgebenden Medium über den metallischen Mantel mittels der dazwischen vorgesehene Isolierschicht sichergestellt. Ein Mantelleiter hat weiterhin ein gutes Umformverhalten, so daß der konstruktiven Ausgestaltung große Freiheiten gegeben sind.

Besonders bevorzugte Weiterbildungen und Ausgestaltungen des erfindungsgemäßen Heizelementes sind Gegenstand der Patentansprüche 2 bis 6.

Im folgenden wird anhand der zugehörigen Zeichnung ein besonders bevorzugtes Ausführungsbeispiel der Erfindung näher beschrieben. Es zeigen
Fig. 1 eine perspektivische Ansicht des selbstregelnden Heizelementes,
Fig. 2 eine perspektivische Teilansicht des in Fig. 1 dargestellten Heizelementes an der Anschlußseite,

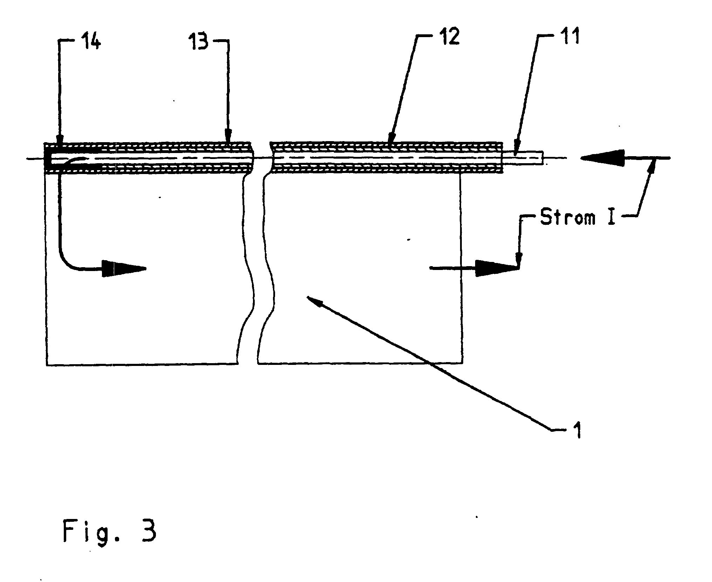

Fig. 3 eine teilweise geschnittene Seitenansicht des Heizelementes,
Fig. 4A eine Querschnittsansicht eines Regelleiters in Form eines Mantelleiters und
Fig. 4B eine Teillängsschnittsansicht des Regelleiters in Form eines Mantelleiters am Kontaktende.

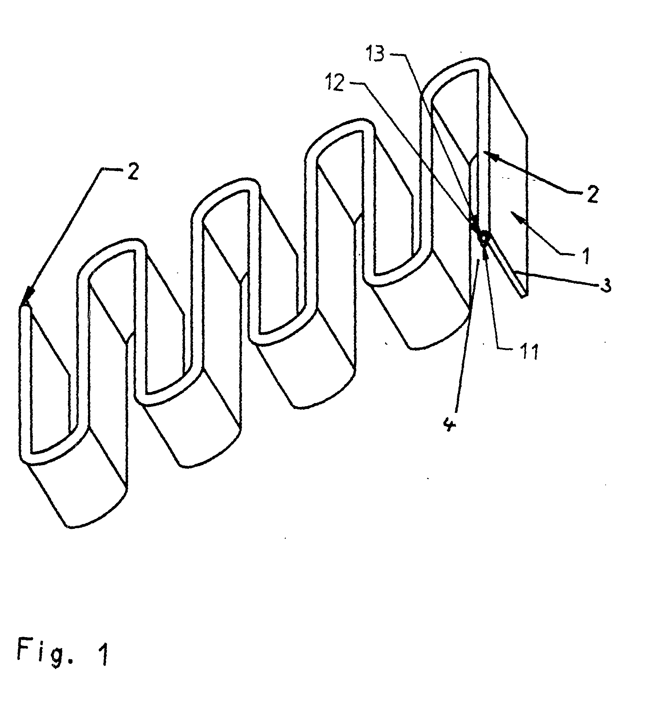

Das in Fig. 1 dargestellte selbstregelnde Heizelement zum Erwärmen eines gasförmigen strömenden Mediums besteht aus einem Bandleiter 1 ohne Regeleigenschaft, d.h. aus einem Material ohne bzw. mit nur geringer Temperaturabhängigkeit seines spezifischen elektrischen Widerstandes in Form eines mäanderförmig gebogenen Bandes und einem Regelleiter 2 aus einem Material mit positivem Temperaturkoeffizienten seines spezifischen elektrischen Widerstands, der über seine Länge thermisch mit dem Bandleiter 1 gekoppelt jedoch elektrisch davon isoliert angeordnet ist. Gemäß Fig. 1 ist der Regelleiter 2 in Form eines Drahtes mit dem mäanderförmig gebogenen Bandleiters 1 an dessen einer Bandkante verschweißt oder verlötet.

Der Regelleiter 2 und der Bandleiter 1 sind elektrisch in Reihe zueinander geschaltet, indem der Regelleiter 2 an dem den Anschlüssen 3 und 4 gegenüberliegenden Ende mit dem Bandleiter 1 elektrisch leitend verbunden ist. Die elektrischen Anschlüsse 3 und 4 sind an einer Seite am Regelleiter 2 und am Bandleiter 1 jeweils ausgebildet.

Von großer Bedeutung ist das Verhältnis des elektrischen Widerstandes des Regelleiters 2 zum elektrischen Widerstand des Bandleiters 1. Bei einem Regelleiter 2 mit hohem Regelfaktor bildet der Bandleiter 1 einen Vorschaltwiderstand, der mit dem Regelleiter 2 in Reihenschaltung verbunden ist. Aufgrund des geringen spezifischen Widerstandes des Regelleiters 2 mit hohem Regelfaktor bei Raumtemperatur dient der Bandleiter 1 zur Begrenzung des Einschaltstromes, wobei als Einflußparameter die Dimensionierung der Querschnittsfläche, der Länge, der Position des elektrischen Kontaktes als auch die Werkstoffauswahl zur Verfügung stehen.

Der Widerstand des Bandleiters 1 entspricht beim Einsatz eines Regelleiters 2 mit hohem Regelfaktor von über 7 bei Temperaturen von 0 bis 1000°C mindestens dem Kaltwiderstand des Regelleiters 2. Beim Einsatz von Regelleitern mit einem Regelfaktor von mehr als 10 (0 bis 1000°C) beträgt der Widerstand des Bandleiters 1 vorzugsweise mindestens das Zweifache des Kaltwiderstandes des Regelleiters 2.

Im stationären Zustand liegt somit der Widerstandsanteil des Regelleiters 2 an der Reihenschaltung aus dem Bandleiter 1 und dem Regelleiter 2 bei mindestens 70°, vorzugsweise bei mehr als 80 % bei Regelleitern mit einem Regelfaktor von größer 10. Der Regelleiter 2 ist somit das Bauteil, das überwiegend für die Wärmeentstehung am Heizelement verantwortlich ist. Ein Teil dieser am Regelleiter 2 erzeugten Wärme wird durch Wärmeleitung an den Bandleiter 1 abgegeben.

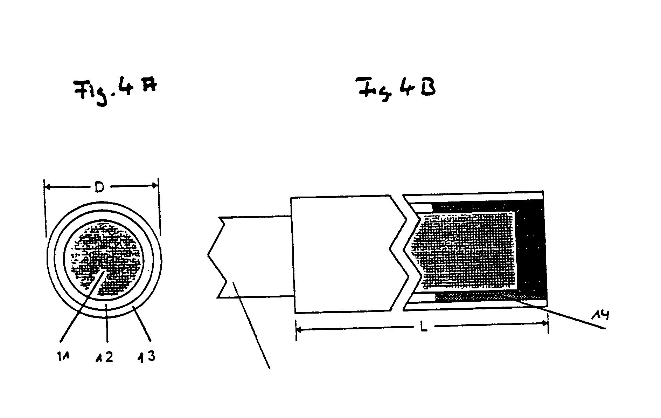

Wie es in Fig. 4A dargestellt ist, ist der Regelleiter 2 vorzugsweise in Form eines Mantelleiters mit einem Regeldraht 11 aus einem Material mit einem Regelfaktor vom mehr als 7 im Temperaturbereich von 0° bis 1000°C, beispielsweise aus Fe, Ni, einer Ni-, Fe- oder CoFe-Legierung mit einem Regelfaktor von mehr als 10, ausgebildet, der über eine keramische Isolierschicht 12, beispielsweise aus MgO, elektrisch isoliert aber thermisch gekoppelt, in einem Metallmantel 13, beispielsweise aus einer CrNi-Legierung, angeordnet ist. Dabei ist die Länge des Regelleiters groß gegenüber seinem Durchmesser.

Wie es in Fig. 4B dargestellt ist, ist der elektrische Kontakt zwischen dem Regelleiter 2 und dem Bandleiter 1 an dem den elektrischen Anschlüssen 3, 4 gegenüberliegenden Ende dadurch hergestellt, daß an diesem Ende über eine Verbindungsstelle der Mantel 13 mit dem Regeldraht 11 elektrisch verbunden ist, so daß der Regeldraht 11 über den Mantel 13 mit dem damit verschweißten oder verlöteten Bandleiter 1 elektrisch verbunden ist. Die Verbindungsstelle 14 ist so gestaltet, daß ein großflächiger Übergang des elektrischen Stromes auf den Mantel 13 mit einem im Verhältnis zum Regeldraht 11 hohen spezifischen elektrischen Widerstand gegeben ist, um partielle Überhitzungen des Mantels 13 zu vermeiden. Dabei kann der Kontakt zwischen dem Regeldraht 11 und dem Mantel 13 beispielsweise dadurch verbessert werden, daß die keramische Isolierschicht 12 im Kontaktbereich entfernt und der Mantel 13 mit dem Regeldraht 11 in Kontakt gebracht wird.

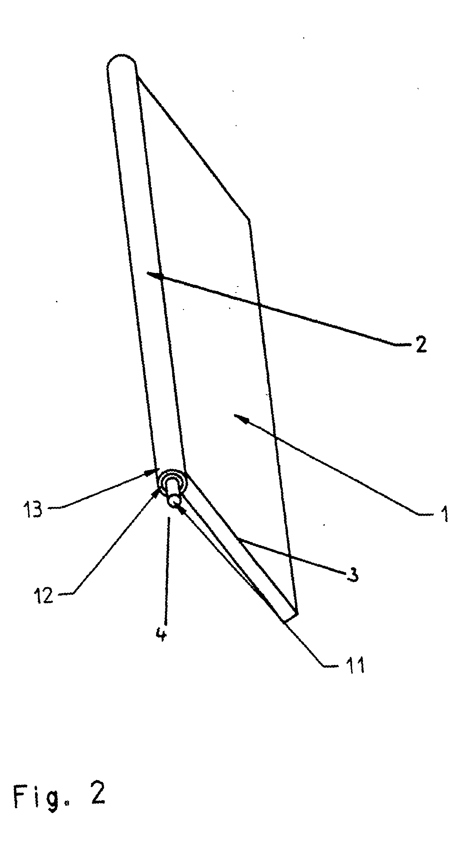

Wie es im einzelnen in Fig. 2 dargestellt ist, sind die elektrischen Anschlüsse 3, 4 am Bandleiter 1 einerseits und am Regelleiter 2 andererseits insbesondere am Regeldraht 11 des als Mantelleiter ausgebildeten Regelleiters 2 vorgesehen. Dazu ist der Regeldraht 11 beispielsweise mit einem Anschlußdraht vorzugsweise aus Kupfer verbunden, während der Bandleiter 1 einen aufgeschweißten Anschlußbolzen aufweist oder mit einem angeformten Steckanschluß versehen ist.

Bei der obigen Ausbildung steht somit der Regelleiter 2 über seine gesamte Länge in einem guten thermischen Kontakt mit dem Bandleiter 1, ist jedoch demgegenüber elektrisch isoliert. Wenn der Mantel 13 des als Mantelleiter ausgebildeten Regelleiters 2 aus einer Chromnickel-Legierung besteht, ist eine außerordentliche guten Korrosionsfestigkeit gewährleistet.

Die elektrische Kontaktierung des Regeldrahtes 11 mit dem Mantel 13 sowie mit dem Bandleiter 1 kann nicht nur durch Löten oder Schweißen sondern auch durch Verstemmen und so weiter erzielt werden.

Der Bandleiter 1 hat neben der Begrenzung des Einschaltstromes des Heizelementes, indem er als Vorschaltwiderstand zum Regelleiter dient, auch die Aufgabe der mechanischen Fixierung des als Mantelleiter ausgebildeten Regelleiters 2, da ein Mantelleiter aufgrund seiner Geometrie insbesondere bei hohen Temperaturen keine ausreichende Eigensteifigkeit besitzt.

Im stationären Zustand beträgt der Widerstandsanteil des Regelleiters 2 an der Reihenschaltung aus Bandleiter 1 und Regelleiter 2 mindestens 70 %, wie es oben bereits erwähnt wurde. Daraus resultiert eine Erwärmung des als Mantelleiter ausgebildeten Regelleiters 2 auf über 1000°C. Der damit verbundene Rückgang der Festigkeit der metallischen Komponenten würden bei einem Mantelleiter ohne Bandleiter zwangsläufig zu einer Zerstörung durch dessen Eigengewicht oder aber durch Schwingungsbelastungen führen.

Das Material des Bandleiters 1 befindet sich jedoch außer im Kontaktbereich zum Mantelleiter auf einem deutlich geringeren Temperaturniveau. Das führt zu einer höheren Festigkeit im Bandleiter 1, so daß dieser über die Verbindung zum Mantelleiter diesen über seine Länge stützen kann.

Durch die wärmeleitende Kopplung zwischen dem Bandleiter 1 und dem als Mantelleiter ausgebildeten Regelleiter 2 wird eine thermische Entlastung über die gesamte Länge erzielt. Das heißt im einzelnen, daß zur Erzielung einer schnellen und deutlichen Abregelung des Heizelementes Kerndrähte 11 des Mantelleiters mit hohem Regelfaktor eingesetzt werden. Um entsprechende Regelfaktoren zu erreichen, müssen diese Leiter auf eine hohe Temperatur von mehr als 1000°C erwärmt werden. Damit entstehen im abgeregelten Zustand Widerstandsverhältnisse, bei denen der Widerstandsanteil und damit der Energieanteil des Regelleiters an der Reihenschaltung in der erwähnten Weise mindestens 70 % beträgt. Aufgrund der geringeren Oberfläche des Mantelleiters würde dieser verglühen, wenn nicht die thermisch leitfähige Verbindung zwischen dem Regelleiter 2 und dem Bandleiter 1 ein Ableiten eines Teils der entsprechenden Wärme in das Bandmaterial des Bandleiters 1 ermöglichen würde.

Der Bandleiter 1 hat die weitere Funktion, den Wärmeübergang zwischen seiner großen Oberfläche und dem umgebenden Luftstrom zu verbessern.

Das Heizelement zeichnet sich somit dadurch aus, daß nach dem Einschalten eine gegenüber dem stationären Zustand stark erhöhte Stromaufnahme vorherrscht. Der Einschaltstrom ist vorzugsweise um den Faktor 3 bis 7 größer als die Stromaufnahme im stationären Zustand. Nach dem Einschalten regelt sich die Stromaufnahme durch die Eigenerwärmung des Regelleiters stetig bis auf den stationären Wert zurück. Der Zeitraum der erhöhten Leistungsaufnahme nach dem Einschalten beträgt weniger als 60 Sekunden, vorzugsweise weniger als 20 Sekunden. Das ist zur Begrenzung der Vorglühdauer z.B. bei Dieselmotoren erforderlich, da eine erhöhte Leistungsaufnahme bei einer gleichzeitigen Anlasserbetätigung zu einem Rückgang der Anlasserdrehzahl und damit zu einer verschlechterten Startwilligkeit des Motors führen würde.

Es können mehrere Regelleiter und mehrere Bandleiter vorgesehen sein, die jeweils in Reihe oder parallel zueinander geschaltet sind. Es sind auch Mischschaltungsformen denkbar. Wenn beispielsweise der Regelleiter zwischen zwei Bandleitern angeordnet ist, ist er zweiseitig, d.h. radial an zwei Stellen in Längsrichtung mit den beiden Bandleitern jeweils durchgehend verschweißt oder verlötet.

Bei einem selbstregelnden Heizelement mit dem oben beschriebenen Aufbau können je nach Auslegung in kurzer Zeit Temperaturen bis 1200°C erreicht werden, was gegenüber Heizelementen auf der Basis von Bariumtitanat-Keramiken mit einer Betriebstemperatur von bis zu maximal 250°C einen entscheidenen Vorteil bietet. Wenn ein derartiges Heizelement zur Ansaugluftvorwärmung einer Brennkraftmaschine verwandt wird, dann wird es vorzugsweise im Ansaugbereich der Brennkraftmaschine direkt der Luft ausgesetzt. Durch die Ausführung des Regelleiters in Form eines Mantelleiters mit korrosionsgeschützter Ausbildung durch den Mantel beispielsweise aus einem Chromnickel-Legierung ist diese Anordnung möglich, ohne eine hohe Korrosionsanfälligkeit des Heizelementes zu riskieren. Aufgrund seiner Ausbildung aus einem Regelleiter und einem Bandleiter in thermischem Kontakt miteinander können bei geringen Temperaturen in der Startphase hohe Einschaltströme und bei hoher Temperaturen und stehender Luft beim Vorkühlen reduzierte Leistungsaufnahmen erzielt werden. Der elektrische Widerstand des Regelleiters steigt danach an, so daß die vom Gesamtbauteil aufgenommene elektrische Leistung abnimmt.

Da das Heizelement selbstregelnd ist, wird kein externes Steuergerät benötigt, so daß es entsprechend kostengünstig ist.

## Patentansprüche

1. Selbstregelndes Heizelement zum Erwärmen eines gasförmigen strömenden Mediums mit
- wenigstens einem Regelleiter (2) mit positivem Temperaturkoeffizienten seines spezifischen Widerstandes und
- wenigstens einem bandförmigen Leiter (1) mit einem im wesentlichen temperaturunabhängigen Widerstand, der zu dem wenigstens einen Regelleiter (2) elektrisch in Reihe geschaltet und über seine Länge thermisch mit dem Regelleiter (2) gekoppelt, jedoch elektrisch demgegenüber isoliert angeordnet ist,
**dadurch gekennzeichnet, daß** der Regelleiter (2) in Form eines Mantelleiters aus einem Regeldraht (11) aufgebaut ist, der über eine keramische Isolierschicht (12) in einem metallischen Mantel (13) angeordnet ist, der über seine Länge mit dem bandförmigen Leiter (1) verbunden ist.

2. Heizelement nach Anspruch 1, **dadurch gekennzeichnet, daß** der bandförmige Leiter (1) und/oder der Regelleiter (2) aus Teilleitern jeweils bestehen, die ihrerseits parallel geschaltet sind.

3. Heizelement nach einem der vorhergehenden Ansprüche, **dadurch gekennzeichnet, daß** der Regeldraht (11) aus Fe, Ni oder einer Ni-, Fe- oder CoFe-Legierung besteht und einen Regelfaktor von mehr als 7 hat.

4. Heizelement nach einem der Ansprüchel, 2 oder 3, **dadurch gekennzeichnet, daß** der Regelleiter (2) und der bandförmige Leiter (1) elektrisch dadurch miteinander verbunden sind, daß an einem Ende des Regelleiters (2) der Mantel (13) mit dem Regeldraht (11) elektrisch verbunden ist.

5. Heizelement nach einem der vorhergehenden Ansprüche, **dadurch gekennzeichnet, daß** der Widerstand des bandförmigen Leiters (1) bei einem Regelleiter (2) mit einem Regelfaktor von mehr als 7 wenigstens dem Kaltwiderstand des Regelleiters (2) entspricht.

6. Heizelement nach einem der Ansprüche 1 bis 4, **dadurch gekennzeichnet, daß** der Widerstand des bandförmigen Leiters (1) bei einem Regelleiter (2) mit einem Regelfaktor von mehr als 10 wenigstens das Zweifache des Kaltwiderstandes des Regelleiters (2) beträgt.

## Claims

1. Self-regulating heating element for heating a gaseous flowing medium, with
- at least one regulating conductor (2) with a positive temperature coefficient of specific resistance, and
- at least one strip-shaped conductor (1) with a substantially temperature-independent resistance which is electrically connected in series with the at least one regulating conductor (2) and thermally coupled over its length to the regulating conductor (2), although is electrically insulated from the latter,
**characterised in that** the regulating conductor (2) is made in the form of an external conductor from a regulating wire (11) which is disposed via a ceramic insulating layer (12) in a metallic sheath (13) which is connected over its length to the strip-shaped conductor (1).

2. Heating element according to Claim 1, **characterised in that** the strip-shaped conductor (1) and/or the regulating conductor (2) in each case consist(s) of component conductors which in turn are connected in parallel.

3. Heating element according to any one of the preceding Claims, **characterised in that** the regulating wire (11) consists of Fe, Ni or an Ni, Fe or CoFe alloy and has a regulating factor of more than 7.

4. Heating element according to any one of Claims 1, 2 and 3, **characterised in that** the regulating conductor (2) and the strip-shaped conductor (1) are electrically connected to one another by connecting the sheath (13) to the regulating wire (11) at one end of the regulating conductor (2).

5. Heating element according to any one of the preceding Claims, **characterised in that**, given a regulating conductor (2) with a regulating factor of more than 7, the resistance of the strip-shaped conductor (1) corresponds at least to the cold resistance of the regulating conductor (2).

6. Heating element according to any one of Claims 1 to 4, **characterised in that**, given a regulating conductor (2) with a regulating factor of more than 10, the resistance of the strip-shaped conductor (1) corresponds at least to twice the cold resistance of the regulating conductor (2).

## Revendications

1. Elément de chauffage autorégulé pour réchauffer l'écoulement d'un milieu gazeux avec
- au moins un conducteur de régulation (2) avec une résistance spécifique ayant un coefficient de température positif et
- au moins un conducteur en forme de ruban (1) avec une résistance dépendant essentiellement de la température, connecté électriquement en série avec le au moins un conducteur de régulation (2) et couplé thermiquement sur sa longueur avec le conducteur de régulation (2), tout en étant cependant isolé électriquement de ce dernier, **caractérisé en ce que** le conducteur de régulation (2) a la forme d'un conducteur à gaine, constitué d'un fil de régulation (11) disposé sur une couche de céramique isolante (12) dans une gaine métallique (13), reliée sur sa longueur avec le conducteur en forme de ruban(1).

2. Elément de chauffage selon la revendication 1, **caractérisé en ce que** le conducteur en forme de ruban (1) et/ou le conducteur de régulation (2) sont constitués de parties de conducteur branchées en parallèle.

3. Elément de chauffage selon l'une des revendications précédentes **caractérisé en ce que** le fil de régulation (11) est constitué de Fe, de Ni ou d'un alliage de Ni, de Fe ou de CoFe et a un facteur de régulation supérieur à 7.

4. Elément de chauffage selon l'une des revendications 1, 2 ou 3 **caractérisé en ce que** le conducteur de régulation (2) et le conducteur en forme de ruban (1) sont reliés électriquement entre eux grâce au fait qu'à une extrémité du conducteur de régulation (2), la gaine (13) est reliée électriquement avec le fil de régulation (11).

5. Elément de chauffage selon l'une des revendications précédentes **caractérisé en ce que** la résistance du conducteur en forme de ruban (1), pour un conducteur de régulation (2) avec un facteur de régulation supérieur à 7, correspond au moins à la résistance à froid du conducteur de régulation (2)

6. Elément de chauffage selon l'une des revendications 1 à 4 **caractérisé en ce que** la résistance du conducteur en forme de ruban (1), pour un conducteur de régulation (2) avec un facteur de régulation supérieur à 10, est au moins égale au double de la résistance à froid du conducteur de régulation (2).
